# EUROPEAN PATENT APPLICATION

(11) **EP 4 807 241 A1**
(43) Date of publication of application: **16.09.2026**
(21) Application number: 25163133.9
(22) Date of filing: 12.03.2025
(51) Int. Cl.: F21V 5/00, G02B 3/00, F21V 8/00

(54) **OPTIC FOR A LUMINAIRE AND LUMINAIRE**

(71) Applicant: Zumtobel Lighting GmbH, 6850 Dornbirn (AT)
(72) Inventor: Keane, Raymond, 6851 Dornbirn (AT); Bowness, Anton, 6851 Dornbirn (AT); Box, James, 6851 Dornbirn (AT); Stockley, Paul, 6851 Dornbirn (AT); Visveswara Gopal Thalluri, Venkata, 6851 Dornbirn (AT); Gassner, Patrik, 6851 Dornbirn (AT)
(74) Representative: Thun, Clemens

(57) **Abstract**

An optic (200) according to a first and/or second implementation is provided as well as a luminaire (1) comprising the respective optic (200). The optic hereby comprises a number of lens elements, wherein each lens element (210) is assigned to a respective light source (110) of the luminaire (1), wherein each lens element (210) comprises a light coupling surface (211) at its base surface (212) for irradiation of light from the respective light source (101); and a connecting element (220, 220a), that is arranged in-between two of the at least two lens elements (210) connecting the respective two lens elements (210). The connecting element may hereby be configured for light decoupling, and/or the spatial light distribution characteristic of a respective group of the lens elements (210, 210b) is different from other lens elements, pointing away from respective distal edges (240) of the optic (200).

## Description

The invention relates to an optic for a luminaire having different components with different light emission characteristics, and a luminaire comprising such an optic.

Currently known optics in use in luminaires comprising a plurality of lens elements and connecting elements connecting the respective lens elements can come in various forms, whereas the individual lens elements are interconnected in a cluster, which either is a linear single line cluster or an array cluster. In either form the light emission characteristic of the optic accepts losses due to structural configurations of the optic, whereas these losses may be caused by light emitted from a respective light source of the luminaire and irradiated into the optic not being efficiently emitted by the optic. Here, respective light might enter respective connecting elements between two lens elements, wherein the light is then reflected internally in the optic and absorbed, thus not emitted efficiently for respective desired illumination of the luminaire.

Further, light being emitted by a lens element that is positioned distally, i.e. in an edge area of the optic, is at least partly directed towards a respective housing of the luminaire so that such light is reflected as spilled light on parts of the luminaire housing creating unwanted shadows and bright patches. Thus, with the currently knows optics inefficiencies in its lighting characteristic are present.

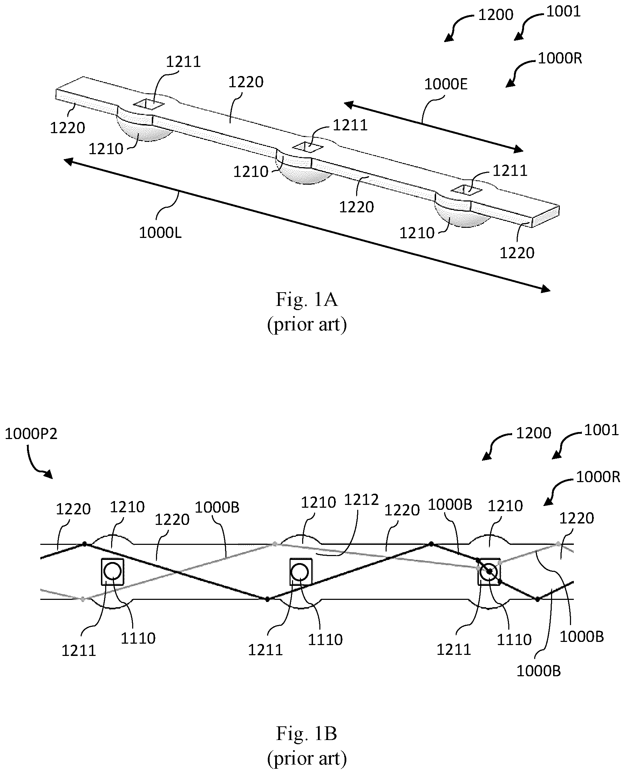

Such an exemplary embodiment of a currently known optic is exemplary and schematically illustrated in Figures 1a and 1b. Here, the shown optic 1200 of the respective luminaire 1001 is configured as a single line cluster optic, with the lens elements 1210 being arranged in one single row 1000R, wherein the optic 1200 extends along a longitudinal axis L, and wherein the longitudinal axis 1000L is parallel to the extension direction 1000E of the optic 1200. The base surface 1212 of the optic 1200 hereby comprises the light coupling surface 1211, wherein in the shown example the light coupling surface 1211 has a light source recess for accommodating a respective light source 1110. This is in particular shown in Figure 1b.

Furthermore shown here is that the connecting elements 1220 that are arranged between two of the respective lens elements 1210 connecting the respective lens elements 1210 are formed as a light guide, whereas light 1000B that is irradiated from a respective lens element 1210 into the connecting element 1220 is not emitted via the respective connecting element 1220 but merely reflected within the optic 1200, such that this light portion 1000P2 of the originally emitted light of the light source 1110 is absorbed by the optic 1200. Thus, the efficiency and efficacy of the optic 1200 is not optimal as a certain portion (i.e. the light portion 1000P2) of the total emitted light by the light source 1110 is not used for direct or indirect illumination but merely wasted inside the optic 1200. Furthermore shown in Figures 1a and 1b, the respective lens elements 1210 of the optic 1200 are all configured same, such that the light emission characteristic and in particular the spatial light distribution characteristic of each of the lens elements 1210 is identical. In the common scenario where the luminaire 1001 comprises a housing wherein the optic 1200 is arranged within the housing, the previously described configuration of the common currently known optic 1200 leads to the case that lens elements 1200 arranged at distal ends of the optic 1200 emit light towards respective nearby parts of the luminaire body, respectively of the housing of the luminaire 1001. This so-called spill light causes bright patches and/or unwanted shadows (i.e. a non-homogenous illumination) on the inner side of e.g. the housing of the luminaire 1001, so that aesthetics of the luminaire 1001 is degraded and glare and non-uniform light emission is received. As apparent to the skilled person, the aforementioned downsides of currently known optics and currently known luminaires comprising such optics likewise apply to different forms and structures of the optic, such that the previous description also applies to an optic having an array cluster rather than the shown single line cluster of Figures 1a and 1b.

Thus, the invention is concerned with the task of providing an optic for a luminaire with improved light emission characteristics. This task is solved by the optic according to any of the independent claims 1 and 13. The invention is defined in the independent claims. Additional features of the invention are provided in the respective dependent claims.

According to a first implementation of the disclosed present invention an optic for a luminaire is provided, the optic comprising: at least two lens elements, wherein each lens element is assigned to a respective light source of the luminaire, wherein each lens element comprises a light coupling surface at its base surface for irradiation of light from the respective light source; and a connecting element, that is arranged in-between two of the at least two lens elements connecting the respective two lens elements, wherein the connecting element is a light guide. Hereby, each lens element is configured to emit a first portion of the light emitted by the respective light source in a main light emission direction of the luminaire, and each lens element is configured to irradiate a second portion of the light emitted by the respective light source into the respective connecting element. Furthermore, the connecting element comprises a light decoupling configuration for decoupling of respective light beams previously irradiated from the respective lens element.

With this optic a utmost efficient and aesthetic light emission of the optic, respectively of the corresponding luminaire, is achieved, as light that is irradiated in the respective present connecting element is not wasted but decoupled therefrom contributing to illumination of the optic (respectively of the luminaire). Here, there may be at least one connecting element per two neighbouring lens elements, depending on the desired shape and configuration of the optic, whereas ideally two (row-wise and potentially also column-wise) neighbouring lens elements may be interconnected via a respective connecting element. In this implementation the respective light decoupling configuration of a respective connecting element in synergy with the respective light irradiation of the lens element accomplishes the improved light emission characteristic of the optic. The light decoupling configuration may hereby comprise light decoupling means, such as a light decoupling structure, or a respective light decoupling shape of at least one respective surface of the connecting element. Different embodiments of the light decoupling configuration may further be combined in a respective connecting element or a respective surface thereof. Thus, light previously irradiated into the connecting element is used for illumination, so that light efficiency and efficacy is improved. Hence, with such an optic, as light emitted by one light source (preferably a LED) is used in a more efficient manner, the overall amount of light sources in the luminaire may be reduced, resulting in a reduced weight, reduced complexity and reduced energy consumption; and/or the drive current of the light sources may be reduced, resulting in less expensive electronic components, and a reduced energy consumption. Moreover, light emission aesthetics of a respective luminaire having such an optic is improved.

Optionally, the light coupling surface comprises a light source recess for accommodating the respective light source at its lens base surface. With such a configuration the light emitted by a respective light source is further efficiently irradiated into the optic via the respective lens element.

Optionally, the connecting element is configured for decoupling of respective irradiated light beams in a direction different to the main light emission direction of the lens element. With this configuration the optic achieves different light emissions, such as a direct and indirect light emission, increasing aesthetics and versatility of the optic, and hence of the respective luminaire.

Hereby the connecting element may be specifically configured for decoupling of respective irradiated light beams for indirect illumination, i.e. for a light emission in a direction mainly being inverse to the main light emission direction.

Optionally, the connecting element is linear strip-shaped, wherein the light decoupling configuration for decoupling of respective light beams is formed by a shape of the outer surface of the connecting element, wherein the outer surface of the connecting element comprises a curved edge extending in extension direction (and hereby maybe in particular extending over the whole length) of the respective connecting element. With such a configuration the light decoupling of the respective connecting element is further efficiently realized, as a respective curved edge easily facilitates decoupling of present light beams inside the respective connecting element.

Hereby all outer surfaces of the connecting element may comprise a respective curved edge; or at least two opposing outer surfaces of the connecting element may comprise a respective curved edge. This configurations each further enlarge the decoupling capabilities of the respective connecting element.

Optionally, the shape of the outer surface of the connecting element comprises a taper of the thickness of the connecting element along its extension direction. With this configuration the weight of the respective connecting element is reduced, whereas furthermore, aesthetics of the optic are improved, and a respective further improved light decoupling on a respective concave surface is provided.

Hereby optionally the taper may be maximum in a central portion of the connecting element, viewed along the extension direction of the connecting element. This results in a more aesthetic light decoupling over the length of the connecting element. Further optionally the taper may be formed via the curved edge, whereas the taper may further be formed on at least one side face of the connecting element, and/or the taper may further be formed on at least one base surface of the connecting element.

Optionally, the shape of the outer surface of the connecting element comprises a thickening of the thickness of the connecting element along its extension direction. With this configuration the steadiness of the respective connecting element is enhanced, whereas furthermore, aesthetics of the optic are improved, and a respective further improved light decoupling on a respective convex surface is provided. Further, with this thickening a surface of the connecting element used for light emission may be enlarged, further improving decoupling.

Hereby optionally the thickening may be maximum in a central portion of the connecting element, viewed along the extension direction of the connecting element. This results in a more aesthetic light decoupling over the length of the connecting element. Further optionally the thickening is formed via the curved edge, whereas the thickening may further be formed on at least one side face of the connecting element, and/or the thickening may further be formed on at least one base surface of the connecting element.

Optionally, at least one side face and/or at least one base surface of the connecting element has another curved edge viewed in a cross sectional view perpendicular to the extension direction of the connecting element. With such a curved edge viewed in a plane perpendicular to the extension direction of the connecting element, a further decoupling direction is realized. The cross sectional view may thus at least partly show concave, i.e. round or elliptical, edges and/or also convex edges.

Optionally, the shape of the connecting element is configured to decouple previously irradiated light beams prior reaching a central portion of the connecting element, viewed along the extension direction of the connecting element. This further improves aesthetics and light decoupling efficiency of the connecting element and thus of the optic.

Optionally, a biggest thickness of a base surface of the connecting element is slimmer than a biggest thickness of each of the respective abutting lens base surfaces. This configuration further improves light decoupling of respective light beams via the respective connecting element.

Optionally, the optic may extend along a longitudinal axis as the main direction of extension, whereby preferably all lens elements are arranged in one single row along the longitudinal axis. Additionally or alternatively, the optic may extend in a plane, with lens elements being arranged in a matrix-like manner, whereby preferably each two neighbouring lens elements viewed column-wise and/or row-wise are connected to one another via a respective connecting element. Thus, different forms of optics are conceivable benefitting of the configuration of the synergy between respective lens elements and respective connecting element(s).

Optionally, a distally arranged lens element of the at least two lens elements has a different light emission characteristic than another of the at least two lens element. With this configuration the light emission of the optic, and thus the luminaire, is further improved, as versatility of lightning scenarios is enhanced. In particular a distally arranged lens element (and potentially also a distally arranged connecting element) may have a different light emission / light distribution characteristic than the remaining respective elements. With such a configuration, an unwanted illumination of structures of the luminaire (e.g. such as a luminaire housing or parts thereof) may be reduced or even prevented, resulting in a more appealing light emission, and less glare due to prevented unwanted reflections and bright spots. This is further elaborated with regard to a grouping of respective lens elements with different light distribution characteristics in the second implementation.

According to a second implementation of the disclosed present invention, an optic for a luminaire is provided. This optic hereby comprises: a plurality of lens elements, wherein each lens element is assigned to a respective light source of the luminaire, wherein each lens element comprises a light coupling surface at its base surface for irradiation of light from the respective light source; and a connecting element, that is arranged in-between two of the at least two lens elements connecting the respective two lens elements. Hereby, the plurality of lens elements is separated into two different lens groups, wherein the different lens groups differ with regard to the spatial light distribution characteristic of each of their lens elements, whereby a first group consists of lens elements with a symmetric spatial light distribution characteristic, and a second group consists of at least one lens element with an asymmetric spatial light distribution characteristic. Furthermore, each of the at least one lens elements of the second group is a distally arranged lens element of the plurality of lens elements of the optic, wherein the spatial light distribution characteristic of each of the lens elements of the second group points away from respective distal edges of the optic arranged nearby the respective lens element of the second group.

With this optic an utmost efficient and aesthetic light emission of the optic, respectively of the corresponding luminaire, is achieved, as light that is emitted by a distally arranged lens element is emitted in a direction away from potential nearby structures where a respective illumination may result in bright spots or brightness differences (also called clouding) or may result respective shadows. Overall, the spill light of the optic is reduced. Thus, the emitted light of the optic, and thus the luminaire, is further improved with regard to unwanted glare and anaesthetic appearance of the emitted light. As apparent this second implementation is easily combinable with the previously described first implementation, as also here (as already described) a respective configuration of the lens elements is conceivable. The respective present connecting element(s) connecting respective two lens elements hereby may be a light guide, and may in particular be configured for light decoupling as elaborated with regard to the first implementation.

Configurations of parts of the optic (such as the lens elements, the connecting element(s), etc.) described with regard to the first implementation are likewise applicable to the optic according to the second implementation and vice versa, unless stated otherwise.

Optionally, the optic extends linear, whereby the connecting element is linear strip-shaped, whereby a respective connecting element is arranged in-between (each) two neighbouring lens elements. Here, the respective present at least one lens element of the second group is arranged at a distal end of the optic, i.e. an end of the optic in extension direction. With a single row configuration of the lens elements, all lens elements are arranged in a single row, so that a maximum of two distal lens elements are present, such that the maximum number of lens elements in such a second group is two. Alternatively. the optic extends in a plane, whereby the connecting element is a single plate shaped element connecting all of the plurality of lens elements, or whereby the connecting element is linear strip-shaped, wherein a respective connecting element is arranged in-between two neighbouring lens elements. The optic may thus be grid-shaped or plate shaped, or a combination thereof.

Optionally, the optic extends along a longitudinal axis as the main direction of extension, whereby preferably all lens elements are arranged in one single row along the longitudinal axis; and/or wherein the plurality of lens elements are arranged in a matrix-like manner.

Optionally, the optic is composed of several connected optic elements. Thus, a plurality of connected optic elements may form the optic. Configurations disclosed herein with regard to the optic may thus be applicable to each of the optic elements and also to the optic per se.

Optionally, the plurality of lens elements further comprise a third group, wherein the third group consists of lens elements with an asymmetric spatial light distribution characteristic, wherein the third group is arranged in-between the first group and the second group, and wherein the spatial light distribution characteristic of each of the lens elements of the third group only comprises a minor component pointing towards the respective distal edges arranged nearby the respective neighbouring lens element of the second group and comprises a major component pointing away from respective distal edges arranged nearby the respective neighbouring lens element of the second group. With such a configuration, a further distinct light distribution configuration is achieved, whereas the portion of emitted light by the lens elements (and depending on the configuration of the connecting element(s) also of the connecting element(s)) directed towards a distal end / edge area of the optic is even further gradually reduced with the third group being arranged in between the first and second group. This further improves aesthetics and further reduces unwanted glare and spill light.

Moreover, the invention further provides a luminaire. The luminaire hereby comprises: an optic according to any one of the herein disclosed embodiments of the first and second implementation or a combination thereof; and light sources, wherein the number of light sources corresponds to the number of lens elements of the optic, and wherein each light source is assigned to a respective lens element of the optic. Thus, a respective luminaire having the discussed improvements of the respective optic is achieved.

Optionally, each of the light sources is a LED. This improves efficiency, cost and required dimension of the light sources, respectively of a respective light source module arranged on top of the respective optic.

Optionally, the luminaire further comprises a housing, whereby the housing may (at least partly) be arranged in vicinity of distal edges of the optic.

The invention is explained in detail below with reference to examples of embodiments and with reference to the drawing. The Figures show:
- Fig. 1a, 1b: shows schematic illustrations in different views of an exemplary embodiment of an optic currently known;
- Fig. 2a: shows a schematic illustration in an angled view of an exemplary embodiment of an optic according to the invention having a plurality of lens elements and respective connecting elements;
- Fig. 2b: shows a schematic enlarged top view of an exemplary embodiment of an optic according to the invention comprising a lens element and two thereto connected connecting elements, with therein irradiated light beam paths;
- Fig. 2c: shows a schematic enlarged side view of an exemplary embodiment of a lens element of an optic with connecting elements connected to the lens element;
- Fig. 2d: shows a schematic illustration in an angled view of another exemplary embodiment of an optic according to the invention having a plurality of lens elements and respective connecting elements;
- Fig. 3a, 3b: show different exemplary configurations of exemplary embodiments of an optic according to the invention extending in a plane, with lens elements being arranged in a matrix like manner;
- Fig. 4a: shows a schematic illustration of an exemplary embodiment of an optic according to the invention extending along a longitudinal axis with the lens elements being arranged in one single row, and a distally arranged lens element being different to the other lens elements;
- Fig. 4b: shows a schematic illustration in view from below of the exemplary embodiment of the optic known from Figure 4a showing the different configurations of the lens elements;
- Fig. 5a: shows a schematic illustration of another exemplary embodiment of an optic according to the invention extending along a longitudinal axis with the lens elements being arranged in one single row having lens elements being grouped in three different groups with respective different light emission characteristics;
- Fig. 5b: shows a schematic illustration in a cross sectional view of the exemplary embodiment of the optic known from Figure 5a showing the different configuration of the lens elements;
- Fig. 5c: shows a schematic illustration in a view from below of the exemplary embodiment of the optic known from Figure 5a showing the different implementation of the lens elements;
- Fig. 6: shows a schematic illustration of an exemplary embodiment of an optic according to the invention extending in a plane with lens elements being arranged in a matrix like manner whereby lens elements arranged at two distal edge areas having a different light emission characteristic than the remaining lens elements of the optic;
- Fig. 7: shows a schematic illustration of an exemplary embodiment of an optic according to the invention, wherein the optic extends in a plane with lens elements being arranged in a matrix like manner with the optic being composed of several connected optic elements.

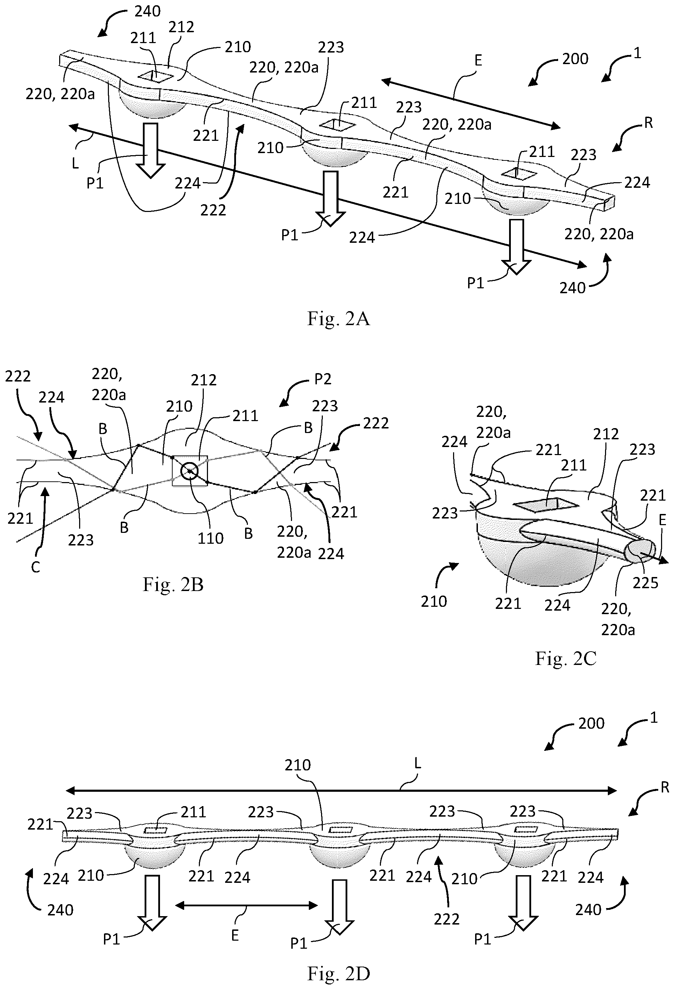

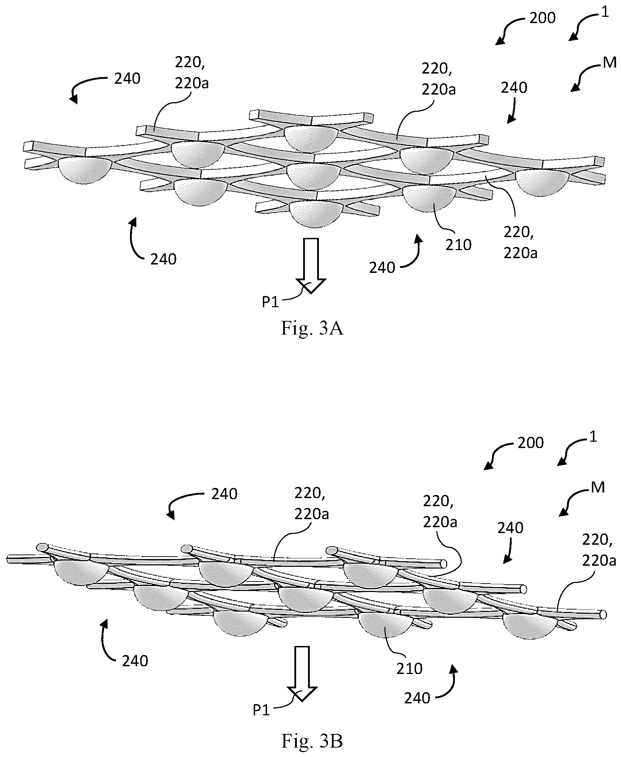

Figures 2a to 7 show different exemplary embodiments of an optic 200 for a luminaire 1 according to the invention, as well as different exemplary embodiments of the luminaire 1 per se. As apparent, the Figures 2a to 2d, 4a, 4b, 5a, 5b and 5c show illustrations of different exemplary embodiments of the optic 200 extending along a longitudinal axis L as the main direction of extension, whereby the lens elements 210 are arranged in one single row R along the longitudinal axis L. The Figures 3a, 3b, 6 and 7 on the other hand show different illustrations of exemplary embodiments of the optic 200 extending in a plane, with lens elements 210 being arranged in a matrix like manner M, whereby the lens elements 210 are interconnected with respective connecting elements 220, 220a, 220b. The Figures show exemplary embodiments of different configurations and specific functioning of the optic 200.

With different configuration of lens elements 210 concerning their light emission characteristic respectively spatial light distribution, different reference signs 210a, 210b, 210c are used in this disclosure, indicating respective affiliation of the respective lens element 210 to a respective lens group G1, G2, G3, as shown in the different exemplary embodiments provided herein. Each respective present connecting element 210 of a respective optic 200 may be linear strip-shaped or alternatively may be plate shaped, as shown in the different exemplary embodiments provided herein. Shown exemplary configurations of the connecting element 220 being a linear strip-shaped connecting element 220a may also be applied to configurations of the connecting element 220 being a plate shaped connecting element 220b, and vice versa, where applicable.

Each of the shown exemplary implementations of the optic 200 are directed towards providing an improved light emission characteristic of the optic 200, and thus of the luminaire 1. Independent of the respectively shown configuration of the respective exemplary embodiment shown in a respective Figure, it is clear to the skilled person that respective configuration described or shown is combinable with other shown or described configurations.

Figure 2a shows an optic 200 for a luminaire 1 comprising a plurality of lens elements 210, wherein each lens element 210 is assigned to a respective light source 110 of the luminaire 1; and a connecting element 220, 220a that is arranged in between two of the plurality of lens elements 210 connecting the respective two lens elements 210, wherein the connecting element 220, 220a is light guide. As indicated in the figure, each lens element 210 comprises a light coupling surface 211 at its base surface 212 for irradiation of light from the respective light source 101, i.e. for light coupling of respective light emitted by a respective light source 101. In the shown example the optic 200 has three lens elements 210, wherein with regard to the underlying idea of the present disclosure, it is merely required that the optic 200 comprises at least one lens element 210 that has a connected thereto connecting element 220.

The present disclosure hereby exemplary provides two implementations of an optic 200 - and several inter-combinable embodiments thereof - for a luminaire 1 directed towards improving the light emission of the optic 200 and thus of the luminaire 1. In the first implementation, the respective connecting element 220 is configured as a light guide comprising a light decoupling configuration for decoupling of respective previously irradiated light beams B to improve light emission efficiency of the optic 200, whereas in the second implementation the respective distally arranged lens elements 210 of the optic 200 are specially configured with regard to their spatial light distribution characteristic in order to improve the overall light emission characteristic of the optic 200, and thus of the luminaire 1. The two implementations hereby each, and in particularly in combination, improve the overall light emission of the respective optic 200. As exemplary illustrated and indicated in the provided Figures, these implementations may be synergistically used.

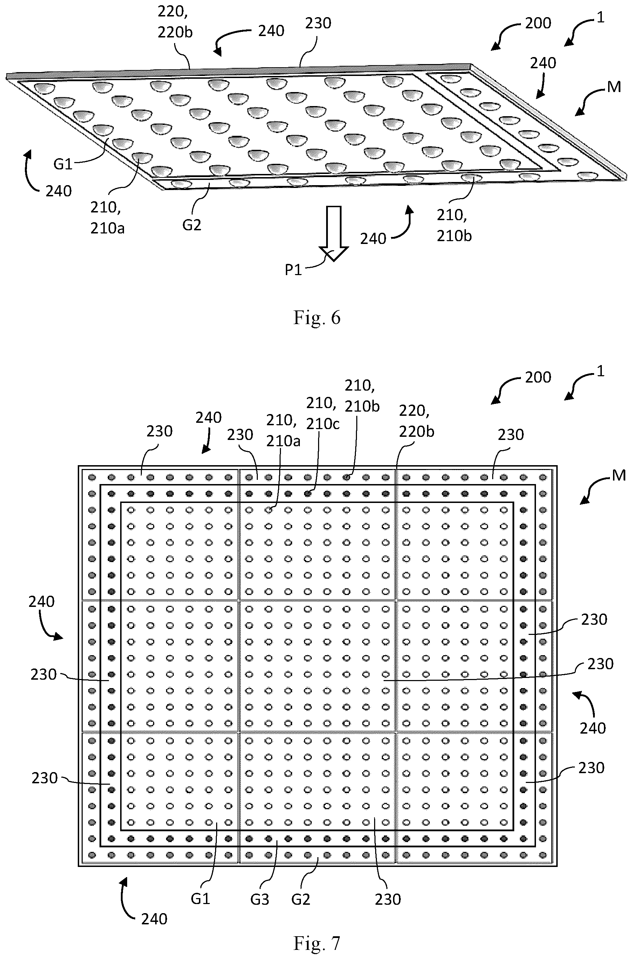

The first implementation with the connecting element 220 being configured to comprise a respective light decoupling configuration for decoupling of respective previously irradiated light beams B that were irradiated from the respective lens elements 210, is displayed in all Figures 2a to 7. Here, each of the respectively provided lens elements 210 is configured to emit a first portion P1 of the light emitted by the respective light source 110 in a main light emission direction of the luminaire 1. Here, each lens element 210 is configured to irradiate a second portion P2 of the light emitted by the respective light source 110 into the respective connecting element 220, as particularly exemplary shown in Figure 2b. It is hereby apparent that the exemplary shown configuration of Figure 2b showing an exemplary embodiment of the optic 200 extending along a longitudinal axis L is the main direction of extension with the lens elements 210 being all arranged in one single row R along the longitudinal axis L is likewise applicable to a configuration of the optic 200 extending in a plane with the respective lens elements 210 being arranged in a matrix like manner M as in particularly shown in Figures 3a and 3b as well as in Figures 6 and 7. While in Figures 6 and 7 the connecting element 220 is not configured as a linear strip shaped element 220a but rather a plate shaped element 220b, respective light decoupling configurations for decoupling of respective previously irradiated light beams B are then possibly merely present at one of the base surfaces 223 of the respective connecting element 220. As particularly shown in Figures 2a, 2b, 2c, 2d, 3a, 3b, 4a, 4b, 5a, 5b, and 5c the light decoupling configuration for decoupling of respective light beams B may be present on any of the surfaces 223, 224 of a respective linear strip shaped connecting element 220. In any embodiment of the first implementation the connecting element 220 comprises a respective light decupling configuration for decoupling of respective light beams B previously irradiated from the respective lens element 210. The respective light decoupling configuration may hereby be implemented by light decoupling means, such as a light decupling structure, or a respective light decoupling shape of the surface.

With this configuration of the connecting element 220, it is achieved that light that is not directly emitted by the optic 200 via the respective lens elements 210 in the main light emission direction (i.e. first portion P1 of the originally emitted light of the respective light source 110) of the luminaire 1 but rather irradiated into respective connecting elements 220 being arranged at sides of the respective lens element 210, i.e. the irradiated second portion P2, is efficiently used for light emission of the optic 200, so that less or ideally no originally emitted light of the light source 210 of the luminaire 1 is unused.

Overall, a respective connecting element 220 may be configured for decoupling of respective irradiated light beams B in a direction different to the main light emission direction of the lens element 210. This is especially exemplary shown in Figure 2b illustrating a second portion P2 of the light emitted by the respective light source 110 being irradiated into respective connecting elements 220 and thereby decoupled from the optic 200 so that this second portion P2 of the light is e.g. essentially emitted sideways of the respective connecting element 220. In other words the second portion P2 is (at least mainly) irradiated in a direction different to the main light emission direction of the lens element 210. It is furthermore conceivable that the light decoupled by the respective connecting elements 220 is (at least mainly) for indirect illumination, whereas it is further possible that essentially no light of the second portion P2 is used for direct illumination.

In the exemplary illustrations of Figures 2a, 2b, 2c, 2d, 3a, 3b, 4b, 5b, 5c the respective connecting elements 220, 220a are each linear strip shaped, whereas the light decoupling configuration for decoupling of respective light beams B is formed by a shape of the outer surface of the respective connecting element 220, 220a. As shown in an exemplary manner, the outer surface of the connecting element 220, 220a comprises a curved edge 221 extending in the extension direction E of the respective connecting element 220, 220a. In the aforementioned exemplary embodiments, the respective curved edge 221 of the connecting element 220, 220a is present on the true opposite side faces 224 of the connecting element 220, 220a, it is likewise conceivable that the curved edge 221 is merely present on one side face 224, or on one base surface 223, or even on both base surfaces 223. It is further possible that all outer surfaces, i.e. the side faces 224 and the base surfaces 223, of the connecting element 220, 220a comprise a respective curved edge 221.

It is also apparent that additionally to the respective present curved edges 221 of a respective connecting element 220, 220a further light decoupling means may be part of the light decoupling configuration for decoupling of respective light beams B. Such light decoupling means may be formed by respective small structures arranged on or at a surface of the respective connecting element 220, 220a and might hereby be in particular arranged on a surface of the connecting element 220, 220a that comprises a respective curved edge 221.

In view of the exemplary embodiments of Figures 2a, 2b, 2c, 2d, 3a, 3b, 4b and 5c, it is explicitly illustrated that the shape of the outer surface of the connecting element 220, 220a comprises a taper 222 of the thickness of the connecting element 220, 220a along its extension direction E. This taper hereby exemplary starts directly at the connection area of the connecting element 220, 220a towards the lens element 210, wherein e.g. the thickness is decreased upon reaching its minimum in a central portion of the connecting element 220, 220a, viewed along the extension direction E of the connecting element 220, 220a. Hence in the shown embodiments, where exemplary the curved edge 221 is formed on the respective two side faces 224 of the respective connecting element 220, 220a, the taper 222 is maximum in the central portion of the respective connecting element 220, 220a. In particular the taper 222 is formed in the exemplary illustrations via the curved edge 221. However, it is additionally or alternatively also conceivable that a respective taper 222 is formed on at least one base surface 223 of a respective connecting element 220, 220a, 220b.

Moreover, there are embodiments conceivable, where the respective present connecting elements 220, 220a, 220b of a respective optic 200 structurally differ, such that the configuration of a respective connecting element 220, 220a, 220b might be different from another present connecting element 220, 220a, 220b. This may in particular be of interest in embodiments, where respective regions of the optic 200 (and thus the respective components such as lens elements 210 and connecting element(s) 220) shall provide a different light emission characteristic than other regions of the respective optic 200, respectively of the luminaire 1.

As furthermore shown in particular in Figures 2a, 2d, 3a, 3b distal edges 240 of the optic 200 may comprise a respective distal lens element 210 and a respective distal connecting element 220, 220a that is only directly connected to the respective distal lens element 210, such that this distal connecting element 220, 220a is not arranged in between two neighbouring lens elements 210. Here, it is in particular conceivable that such an distal connecting element 220, 220a is configured with a different light emission configuration / light distribution characteristic different to the respective light emission configuration / light distribution characteristic of connecting elements 220, 220a being arranged in between two neighbouring lens elements 210.

With regard to the curved edge 221, it is furthermore to be said that the respective curved edge 221 may be implemented differently. Here it is conceivable that the shape of an outer surface 223, 224 of the connecting element 220, 220a comprises a thickening of the thickness of the connecting element 220, 220a along its extension direction E. Such a thickening, that essentially is the inverse of the aforementioned taper 222, is not shown in the provided Figures. In such an exemplary embodiment the thickening might like wise be maximum in a central portion of the respective connecting element 220, 220a viewed along the extension direction E of the connecting element 220, 220a. Analogously it is also possible that the thickening is formed via the curved edge 221. And similarly to the aforementioned taper 222 the thickening may be formed on at least one side face 224 of the connecting element 220, 220a and/or the thickening may be formed on at least one base surface 223 of the connecting element 220, 220a. Also the combination of a thickening and of a taper 222 at one respective connecting element 220, 220a is conceivable.

As particularly shown in Figures 2c, 2d and 3b there are further exemplary embodiments possible where at least one side face 224 and/or at least one base surface 223 of a respective connecting element 220, 220a has another curved edge 225 viewed in a cross-sectional view perpendicular to the extension direction E of the connecting element 220, 220a. In the shown examples each side face and each base surface 223 comprises such another curved edge 225, such that in this example the cross-sectional view perpendicular to the extension direction E of the connecting element 220, 220a is essentially circular respectively elliptic.

The configuration with the respective another curved edge 225 enables a respective candid bite emission direction of the second portion P2, such that at least a portion of the second portion P2 may further easily be used for direct or indirect light emission. This other curved edge 225 (possibly also referred to as further curved edge 225) may be an additional or also an alternative configuration to the previously discussed curved edge 221. The Figures 2c, 2d and 3b each show that the combination of the two curved edges 221, 225 is conceivable (whereas of course a respective configuration may also be partially performed at respective side of the connecting element 220, 220a). As also indicated in Figure 2c, respective connecting elements 220, 220a of an optic 200 do not necessarily be formed identical.

Figures 3a and 3b show that the aforementioned described configuration of the optic 200 and its respective connecting elements 220, 220a is also applicable to the configuration of the optic 200 extending in a plane. Here the respective present lens elements 210 ideally are arranged in a matrix like manner M, whereby each two neighbouring lens elements 210 viewed column-wise and row-wise are connected to another via a respective connecting element 220, 220a. The distance in between respective two neighbouring lens elements 210 viewed column-wise and/or row-wise may essentially be same. As apparent in view of Figures 2A, 3A and 2D and 3B the respective Figures 3A and 3B show exemplary embodiments of the respective optics 200 in a plane configuration of the respective optics 200 of Figures 2A and 2D extending along the longitudinal axis L as the main direction of extension with lens elements 210 being arranged in one single row R.

As exemplary indicated in Figure 2b the shape of the connecting element 220, 220a may be configured to decouple previously irradiated light beams B prior reaching a central portion of the connecting element 220, 220a viewed along the extension direction E of connecting element 220, 220a. This configuration achieves a further favourable emission characteristic of the optic 200 as the respective light beams B are efficiently decoupled from the optic 200 such that losses are minimized. The decoupling of previously radiated light beams B prior reaching a central portion of the respective connecting element 220, 220a may hereby be realized with a respective convex profile of the connecting element 220, 220a as previously discussed as a respective thickening, or may also be achieved with a respective concave profile of the respective connecting element 220, 220a as previously discussed as the taper 222. It is further conceivable that additionally and/or alternatively the respective decoupling of light beams B could be achieved with other light decoupling means as previously discussed.

Especially with regard to the specific shown configuration of the connecting elements 220, 220a having a taper 222 (but also conceivable with other configurations e.g. with a connecting element 220, 220a comprising a thickening), the connecting element 220, 220a may be configured such that a biggest thickness of its base surface 223 is slimmer than the biggest thickness of each of the respective abutting lens space surfaces 212 of the respective lens elements 210.

To further improve light emission characteristics of the optic 200 a respective distally arranged lens element 210 of the at last two lens elements 210 has a different light emission characteristic than another one of the at least two lens elements 210. With such a structure the light emission at distal edges 240 of the optic 200 may be configured in a respective desired manner, such that light emissions towards housing elements or other abutting structures by the optic 200 of the luminaire 1 are (strongly) reduced or ideally deleted, such that overall a light emission by the lens elements 210 reflecting on parts of the luminaire 1 (e.g. the luminaire body, the luminaire housing, or the like) creating unwanted shadows and/or bright patches is at least strongly reduced (or even prevented). With the configuration of the distally arranged lens elements 210 their light emission is redirected away from non-desired areas, such that the light emission of the luminaire 1 is further homogenous over the area of the optic 200 with reduced/removed light emission that may cause glare or non-aesthetic light spots and shadows (i.e. different brightness, also known as clouding).

This implementation of at least one distally arranged lens element 210 of the respective present lens elements 210 having a different light emission characteristic than the other lens elements 210, is likewise applicable for an optic 200 extending along longitudinal axis L as the main direction of the extension as well as an optic 200 extending in a plane. While in view of optic 200 having lens elements 210 being arranged in one single row R along the longitudinal axis L such a distally arranged lens element 210 may be a lens element 210 being arranged at an end portion viewed in the longitudinal extension direction L. Concerning an optic 200 extending in a plane with respective lens elements 210 being arranged in a matrix like manner M a respective distally arranged lens elements 210 may be a lens element 210 arranged at an edge end area (i.e. a distal edge 240) of the optic 200.

In the second implementation of the present disclosure of an optic 200 for a luminaire 1 providing an improved light emission characteristic, the optic 200 likewise comprises a plurality of lens elements 210 and a connecting element 220, 220a, 220b that is arranged in between two of the at least two lens elements 210 connecting the respective two lens elements 210. Each lens element 210 is assigned to a respective light source 110 of the luminaire 1, wherein each lens element 210 comprises a light coupling surface 211 at its base surface 212 for irradiation of light from the respective light source 101. Here, the plurality of lens elements 210, 210a, 210b is separated into two different lens groups G1, G2 wherein the different lens groups G1, G2 differ with regard to the spatial light distribution characteristic 260a, 260b of each of their lens elements 210, 210a, 210b. A first group G1 hereby consists of lens elements 210, 210a with a symmetric spatial light distribution characteristic 260a, and a second group G2 consists of at least one lens element 210, 210b with an asymmetric spatial light distribution characteristic 260b. Each of the at least one lens elements 210, 210b of the second group G2 is a distally arranged lens element 210, 210b of the plurality of lens elements 210 of the optic 200, wherein the spatial light distribution characteristic 260b of each of the lens elements 210, 210b of the second group G2 (mainly) points away from respective distal edges 240 arranged nearby the respective lens element 210, 210b of the second group G2. Thus, at least some of the distally arranged lens elements 210 of the plurality of lens elements 210 have different light emission characteristics than respective other of the plurality of lens elements 210. With this implementation the light emission characteristic of respective distal lens elements 210 is configured for a more efficient light emission in the sense of contributing in a further improved manner to the desired light emission of the luminaire 1, as the direction of light emission of the respective lens elements 210, 210b of the second group G2 is directed away from potential other structural elements of the luminaire 1 (e.g., such as a housing structure or housing of the luminaire 1). This further improves the light emission of the luminaire 1 and reduces anaesthetic bright spots or shadow spots at edge areas of the luminaire 1 and further reduces glare. As apparent this implementation of different groups G1, G2, G3 of lens elements 210 may be synergistically combined with the previously discussed first implementation of the optic 200, and hereby in particular with the provided exemplary embodiments of the connecting elements 220.

As different forms and shapes of a luminaire 1 are conceivable, it is hereby not necessary that all distal lens elements 210 are part of the second group G2. Preferably these distal lens elements 210 that are indeed arranged at distal edges 240 (or distal edge areas 240) of the optic 200 that are in close vicinity to a respective structure of the luminaire 1 where respective bright spots, shadow spots or glare might otherwise occur, are respectively configured and part of the second group G2. This is exemplary shown in Figure 6 indicating that the second group G2 is present at two of the four distal edge areas of the optic 200. It is however also conceivable that all four edges of a respective optic 200 are provided with distal lens elements 210, 210b having a spatial light distribution characteristic 260b pointing away from the respective distal edges 240, such that the second group G2 of the lens elements 210 is present at all four distal edge areas of the optic 200. Analogously, it is further possible that an embodiment of the optic 200 comprises lens elements 210, 210b of the second group G2 being arranged at three or merely one distal edge area of a respective optic 200. In special exemplary embodiments where only some portions of a distal edge area 240 of an optic 200 might be in close vicinity of another structural component (e.g. a housing or the like) of the luminaire 1, it is possible that the second group G2 with lens elements 210, 210b is only partially arranged at the respective distal edge areas 240.

Figure 7 shows an exemplary embodiment where the optic 200 is composed of several connected optic elements 230, wherein it is apparent that the composition and structure of the lens elements 210 of the respective optic elements 230 differs. In this regard, it is illustrated in Figure 7 that the lens elements 210, 210b of a second group G2 are arranged at the four distal edge areas 240 of the optic 200 and the lens elements 210, 210a of the first group G1 are arranged in a central portion of the optic 200. Figure 7 shows the further exemplary embodiment, where a third group G3 is present, wherein the third group G3 comprises lens elements 210, 210c with an asymmetric spatial light distribution characteristic 260c that differs from the spatial light distribution characteristics 260a, 260b of the lens elements 210, 210b of the second group G2 and of the lens elements 210, 210a of the first group G1. In this exemplary embodiment the third group G3 is arranged in between the first group G1 and the second group G2 wherein the spatial light distribution characteristic 260c of each of the lens elements 210, 210c of the third group G3 only comprises a minor component pointing towards the respective distal edges 240 arranged nearby the respective neighbouring lens element 210, 210b of the second group G2 and further comprises a major component pointing away from respective distal edges 240 arranged nearby the respective neighbouring lens element 210, 210b of the second group G2. With this embodiment the light emission behaviour of the optic 200 is further smoothed, as the difference in light emission of the first and second group G1, G2 is smoothed with the third group G3 in between.

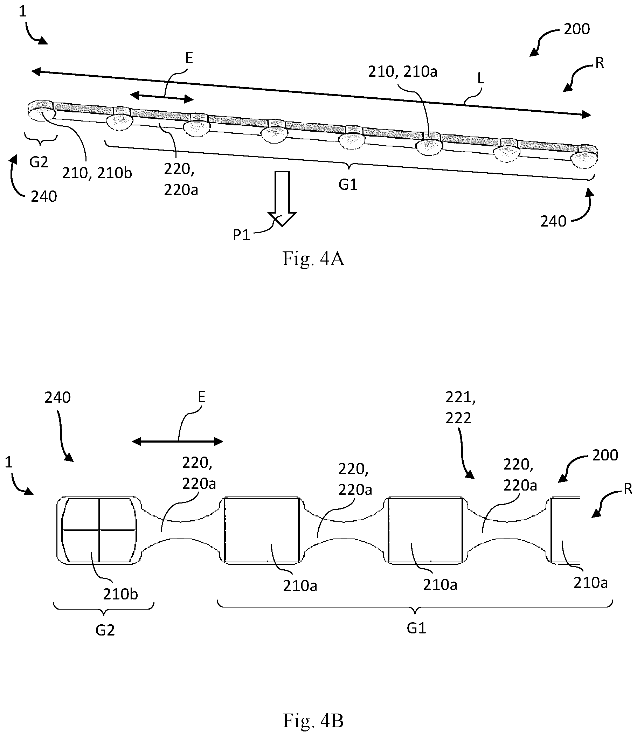

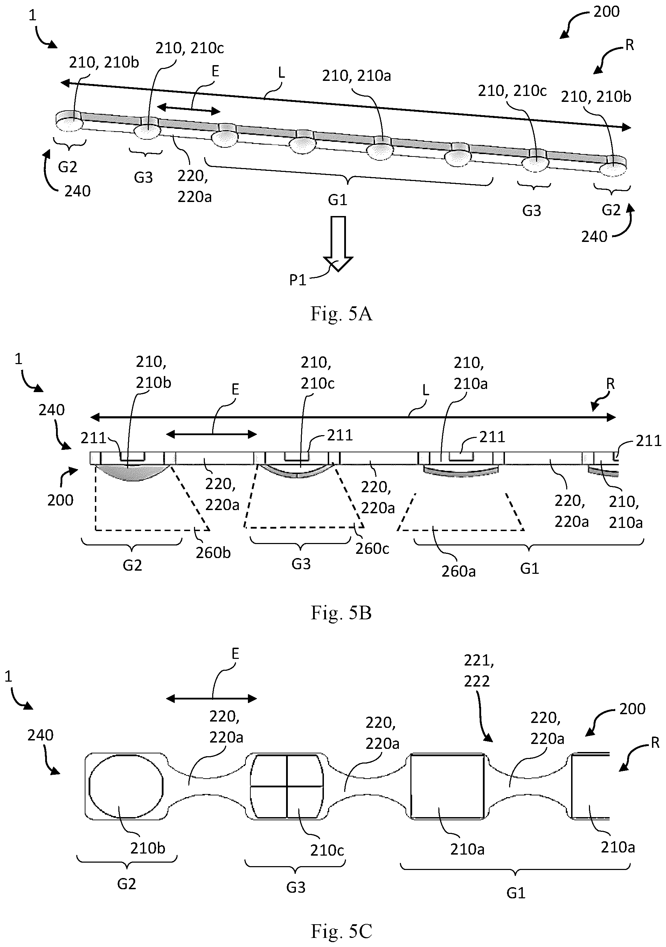

While Figures 6 and 7 each show an optic 200 extending in a plane with the connecting element 220, 220b being a single plate shaped element connecting all of the respective present lens elements 210 it is likewise conceivable that the respective configuration is implemented with an optic 200 extending in a plane whereby the respective connecting elements 220, 220a are linear strip shaped, and arranged in between two neighbouring lens elements 210, as exemplary shown in Figures 3a and 3b. This configuration is further applicable exemplary to an optic 200 extending linearly, whereby each of the connecting elements 220, 220a is linear strip shaped and arranged in between respective two neighbouring lens elements 210. Different exemplary embodiments of such an optic 200 extending linearly are shown with the exemplary illustrations of Figures 4a, 4b, 5a, 5b, 5c.

Figures 4a and 4b show an exemplary embodiment of an optic 200 extending linearly along a longitudinal axis L as the main direction of extension, whereby all lens elements 210 are arranged in one single row R along the longitudinal axis L. Here, at one distal end 240 of the shown exemplary embodiment of the optic 200 a lens element 210, 210b of a second group G2 is arranged, wherein the remaining lens elements 210, 210a belong to a first lens group G1. The two lens groups G1, G2 hereby differ with regard to the spatial light distribution characteristic 260a, 260b of the respective lens elements 210, whereby the first G1 consists of lens elements 210, 210a with a symmetric spatial light distribution characteristic 260a and the second group G2 has (in the illustrated example) one lens element 210, 210b with an asymmetric spatial light distribution characteristic 260b. The spatial light distribution characteristic 260b of the lens element 210, 210b of the second group G2 hereby points away from its respective distal edge 240 arranged nearby to the respective lens element 210, 210b (as exemplary shown in Figure 5B for illustration purposes).

In the exemplary illustration of Figures 4a (and also 5a), the respective connecting elements 220, 220a arranged in between respective two neighbouring lens elements 210 may comprise a light decoupling configuration for decoupling of respective light beams B previously irradiated from the respective lens element 210. These light decoupling configuration may in particular be formed by a respective decoupling surface or light decoupling structures on the surface - whereas a respective configuration with a curved edge 221 or another curved edge 225 is hereby not shown in these Figures. Figure 4a shows an exemplary view from below of an exemplary embodiment of an optic 200, whereby here the connecting elements 220, 220a likewise comprise a light decoupling configuration for decoupling of respective light beams B, wherein here the configuration for decoupling of respective light beams B is formed by a shape of the outer surface of the connecting element 220, 220a and in particular by the taper 222 of the thickness of the connecting element 220, 220a along its extension direction E. As exemplary shown the taper 222 may be formed near the curved edge 221. With regard to the composition of lens elements 210, Figure 4b shows a similar exemplary embodiment as Figure 4a, wherein here also the distal arranged lens elements 210, 210b has a different spatial light distribution characteristic 260b than the remaining lens elements 210, 210a of the optic 200. The grouping of the respective lens elements 210 is similar to the one shown exemplary in Figure 4a, with the distal lens element 210, 210b being in the second lens group G2, and the other lens elements 210, 210a being in the first lens group G1.

Figures 5a, 5b, 5c show an exemplary embodiment of the optic 200 comprising three lens groups G1, G2, G3 wherein groups G2 and G1 are arranged similarly to the exemplary implementations shown and discussed with regard to Figures 4a, 4b, and 6, whereby (similar to the configuration shown in Figure 7) a third group G3 consisting of lens elements 210, 210c within an asymmetric spatial light distribution characteristic 260c is further present. Hereby, the third lens group G3 is arranged in between the first group G1 and the second group G2, wherein the component pointing towards the respective distal edges 240 in the spatial light distribution characteristic 260c is smaller than the respective portion in the spatial light distribution characteristic 260a of the lens elements 210, 210a of the first group G1, but bigger than the respective portion in the spatial light distribution characteristic 260b of the respective lens elements 210, 210b of the second group G2. The major component of the light distribution characteristic 260c of the lens elements 210, 210c of the third group G3 points away from respective distal edges 240 arranged nearby the respective neighbouring lens element 210, 210b of the second group G2. As with the other exemplary embodiments of the optic 200, the connecting elements 220 may be formed as a light guide, wherein with such a configuration the respective connecting elements 220, 220a preferably comprise a respective light decoupling configuration as previously exemplary described and illustrated.

Figure 5b schematically and exemplary illustrates a possible configuration of the spatial light distribution characteristics 260a, 260b, 260c of the different lens elements 210 of the different lens groups G1, G2, G3. This exemplary configuration is likewise applicable to the other herein described exemplary embodiments. The shown schematic illustrates what is meant by the terminology of a respective light component 'pointing away' e.g. from a respective distal edge 240 of the optic.

The previously described light coupling surface 211 of the respective lens elements 210 may comprise light source recess 211 for accommodating the respective light source 101 of the luminaire 1 at its lens base surface 212.

Furthermore, provided in this disclosure is a luminaire 1, wherein the luminaire 1 may comprise an optic 200 according to anyone of the herein previously discussed exemplary embodiments or combination thereof, and wherein the luminaire 1 further comprises respective light sources 110, wherein the number of light sources 110 corresponds to the number of lens elements 210 of the optic 200, and wherein each light source 110 is assigned to a respective lens element 210 of the optic 200. Preferably each one of the light sources 110 is an LED. Further, preferably the luminaire 1 further comprises a housing, whereby the housing is arranged in vicinity of distal edges 240 of the optic 200.

Thus, with the present disclosure a luminaire 1 and an optic 200 is achieved providing an improved light emission characteristic.

## Claims

1. An optic (200) for a luminaire (1), comprising:
• at least two lens elements (210), wherein each lens element (210) is assigned to a respective light source (110) of the luminaire (1), wherein each lens element (210) comprises a light coupling surface (211) at its base surface (212) for irradiation of light from the respective light source (101);
• a connecting element (220, 220a), that is arranged in-between two of the at least two lens elements (210) connecting the respective two lens elements (210), wherein the connecting element (220, 220a) is a light guide;
wherein each lens element (210) is configured to emit a first portion (P1) of the light emitted by the respective light source (110) in a main light emission direction of the luminaire (1),
whereas each lens element (210) is configured to irradiate a second portion (P2) of the light emitted by the respective light source (110) into the respective connecting element (220, 220a); wherein the connecting element (220, 220a) comprises a light decoupling configuration for decoupling of respective light beams (B) previously irradiated from the respective lens element (210).

2. Optic according to claim 1,
wherein the connecting element (220, 220a) is configured for decoupling of respective irradiated light beams (B) in a direction different to the main light emission direction of the lens element (210);
wherein preferably the connecting element (220, 220a) is configured for decoupling of respective irradiated light beams (B) for indirect illumination.

3. Optic according to any one of the preceding claims 1 or 2,
wherein the connecting element (220, 220a) is linear strip-shaped;
wherein the light decoupling configuration for decoupling of respective light beams (B) is formed by a shape of the outer surface of the connecting element (220, 220a), wherein the outer surface of the connecting element (220, 220a) comprises a curved edge (221) extending in extension direction (E) of the respective connecting element (220, 220a);
wherein preferably at least two opposing outer surfaces (223, 224) of the connecting element (220, 220a) comprise a respective curved edge (221).

4. Optic according to claim 3,
wherein the shape of the outer surface of the connecting element (220, 220a) comprises a taper (222) of the thickness of the connecting element (220, 220a) along its extension direction (E).

5. Optic according to claim 4,
wherein the taper (222) is maximum in a central portion of the connecting element (220, 220a), viewed along the extension direction (E) of the connecting element (220, 220a); and/or
wherein the taper (222) is formed via the curved edge (221); and/or
the taper (222) is formed on at least one side face (224) of the connecting element (220, 220a); and/or
the taper (222) is formed on at least one base surface (223) of the connecting element (220, 220a).

6. Optic according to any one of the preceding claims 3 to 5,
wherein the shape of the outer surface of the connecting element (220, 220a) comprises a thickening of the thickness of the connecting element (220, 220a) along its extension direction (E).

7. Optic according to claim 6,
wherein the thickening is maximum in a central portion of the connecting element (220, 220a), viewed along the extension direction (E) of the connecting element (220, 220a); and/or
wherein the thickening is formed via the curved edge (221); and/or
the thickening is formed on at least one side face (224) of the connecting element (220, 220a); and/or
the thickening is formed on at least one base surface (223) of the connecting element (220, 220a).

8. Optic according to any one of the preceding claims,
wherein at least one side face (224) and/or at least one base surface (223) of the connecting element (220, 220a) has another curved edge (225) viewed in a cross sectional view perpendicular to the extension direction (E) of the connecting element (220, 220a).

9. Optic according to any one of the preceding claims 3 to 8,
wherein the shape of the connecting element (220, 220a) is configured to decouple previously irradiated light beams (B) prior reaching a central portion of the connecting element (220, 220a), viewed along the extension direction (E) of the connecting element (220, 220a).

10. Optic according to any one of the preceding claims,
wherein a biggest thickness of a base surface (223) of the connecting element (220, 220a) is slimmer than a biggest thickness of each of the respective abutting lens base surfaces (212).

11. Optic according to any one of the preceding claims,
wherein the optic (200) extends along a longitudinal axis (L) as the main direction of extension, whereby preferably all lens elements (210) are arranged in one single row (R) along the longitudinal axis (L); and/or
wherein the optic (200) extends in a plane, with lens elements (210) being arranged in a matrix-like manner (M), whereby preferably each two neighbouring lens elements (210) viewed column-wise and/or row-wise are connected to one another via a respective connecting element (220, 220a).

12. Optic according to any one of the preceding claims,
wherein a distally arranged lens element (210) of the at least two lens elements (210) has a different light emission characteristic than an other of the at least two lens element (210).

13. An optic (200) for a luminaire (1), comprising:
• a plurality of lens elements (210), wherein each lens element (210) is assigned to a respective light source (110) of the luminaire (1), wherein each lens element (210) comprises a light coupling surface (211) at its base surface (212) for irradiation of light from the respective light source (101);
• a connecting element (220, 220a, 220b), that is arranged in-between two of the at least two lens elements (210) connecting the respective two lens elements (210);
wherein the plurality of lens elements (210) is separated into two different lens groups (G1, G2, G3), wherein the different lens groups (G1, G2, G3) differ with regard to the spatial light distribution characteristic of each of their lens elements (210), whereby a first group (G1) consists of lens elements (210, 210a) with a symmetric spatial light distribution characteristic, and a second group (G2) consists of at least one lens element (210, 210b) with an asymmetric spatial light distribution characteristic,
wherein each of the at least one lens elements (210, 210b) of the second group (G2) is a distally arranged lens element (210, 210b) of the plurality of lens elements (210) of the optic (200),
wherein the spatial light distribution characteristic of each of the lens elements (210, 210b) of the second group (G2) points away from respective distal edges (240) of the optic (200) arranged nearby the respective lens element (210, 210b) of the second group (G2).

14. Optic according to claim 13,
wherein the optic (200) extends linear, whereby the connecting element (220, 220a) is linear strip-shaped, whereby a respective connecting element (220, 220a) is arranged in-between two neighbouring lens elements (210); or
wherein the optic (200) extends in a plane, whereby the connecting element (220, 220b) is a single plate shaped element connecting all of the plurality of lens elements (210), or whereby the connecting element (220, 220a) is linear strip-shaped, wherein a respective connecting element (220, 220a) is arranged in-between two neighbouring lens elements (210);
wherein preferably the connecting element (220, 220a, 220b) is a light guide;
wherein preferably the light coupling surface (211) comprises a light source recess for accommodating the respective light source (101) at its lens base surface (212).

15. Optic according to any one of the preceding claims 13 or 14,
wherein the optic (200) extends along a longitudinal axis (L) as the main direction of extension, whereby preferably all lens elements (210) are arranged in one single row (R) along the longitudinal axis (L); and/or
wherein the plurality of lens elements (210) are arranged in a matrix-like manner (M).

16. Optic according to any one of the preceding claims 13 to 15,
wherein the optic (200) is composed of several connected optic elements (230); and/or
wherein the plurality of lens elements (210) further comprise a third group (G3), wherein the third group (G3) consists of lens elements (210, 210c) with an asymmetric spatial light distribution characteristic, wherein the third group (G3) is arranged in-between the first group (G1) and the second group (G2), and wherein the spatial light distribution characteristic of each of the lens elements (210, 210c) of the third group (G3) only comprises a minor component pointing towards the respective distal edges (240) arranged nearby the respective neighbouring lens element (210, 210b) of the second group (G2) and comprises a major component pointing away from respective distal edges (240) arranged nearby the respective neighbouring lens element (210, 210b) of the second group (G2).

17. A luminaire (1), the luminaire (1) comprising:
• an optic (200) according to any one of the preceding claims 1 to 12; or an optic (200) according to any one of the preceding claims 14 to 16;
• light sources (110), wherein the number of light sources (110) corresponds to the number of lens elements (210) of the optic (200), and wherein each light source (110) is assigned to a respective lens element (210) of the optic (200);
wherein preferably each of the light sources (110) is a LED;
wherein preferably the luminaire (1) further comprises a housing, whereby the housing is arranged in vicinity of distal edges (240) of the optic (200).
